# EUROPEAN PATENT APPLICATION

(11) **EP 4 461 532 A1**
(43) Date of publication of application: **13.11.2024**
(21) Application number: 23382442.4
(22) Date of filing: 11.05.2023
(51) Int. Cl.: B32B 27/12, B32B 5/02, B32B 7/12, B32B 27/28, D06N 3/02, D06N 3/00

(54) **REINFORCED LEATHER ALTERNATIVE MATERIAL**

(71) Applicant: Next-Gen Leather, S.L., 28010 Madrid (ES)
(72) Inventor: GARCÍA MARTÍNEZ, Concepción, E-28010 Madrid (ES)
(74) Representative: ABG Intellectual Property Law, S.L.

(57) **Abstract**

The present invention relates to a material that can be used as a leather substitute comprising: a layer of bacterial cellulose, (BC), and a layer of textile, wherein both layers are attached each other. The present invention also relates to the preparation method for preparing said material, to a footwear or any other article comprising same and to the use thereof as a structural component in industries associated with leather such as the textile, clothing, apparel, footwear, furniture and transport sectors.

## Description

### TECHNICAL FIELD OF THE INVENTION

The present invention may be encompassed within the field of leather and related industries. More particularly, it relates to a sustainable material that can be used as a leather substitute, to the preparation method for preparing said material, to a footwear or any other article comprising same and to the use thereof as a structural component in industries associated with leather such as the textile, clothing, apparel, footwear, furniture and transport sectors.

### BACKGROUND OF THE INVENTION

Leather, in its most traditional definition, is the material that results from tanning animal's hides or skins. Leather is a bio-based and biodegradable material with a tradition nearly as long as humankind. For centuries, it was used as a strong and long-lasting material with a broad spectrum of materials properties. Leather was used as protective and decorative clothing for sports goods and as technical material, e.g., for transmission belts, buckets, or as wineskin. Until the middle of the 19th century, leather occupied the materials property gap of a flexible material besides stone, metal, and wood as hard materials and various textiles, which were not waterproof. Processing allowed adjusting the leather properties from a hard board-like appearance, e.g., as sole leather to very soft touch textile-like glove leathers. The basic structure is an animal skin, which can be described as a non-woven with different density gradients in grain, papillary and reticular layer.

The leather manufacturing process may be divided into three fundamental subprocesses, namely the beamhouse (preparation of hides or skins), tanning (in the tanyard) and finishing (in post tanning area). More specifically, the process involves a series of mechanical and chemical operations which may be systematized as follows: soaking, unhairing and liming, fleshing and splitting, deliming and bating, pickling, tanning, neutralization, retanning, dying, fatliquoring, drying milling, and lastly finishing. Environmental issues associated with these operations include wastewater, air emissions, solid waste and hazardous materials. Further, raising and slaughtering the millions of animals whose skins feed the industry is inefficient, cruel, and comes with a huge environmental cost. Nowadays, both sustainability and animal welfare have become increasingly important issues for the society.

Currently, the upstream production of the traditional leather sector has already been considered unsustainable by policy makers and regulatory bodies. Knowing that the animal agriculture in the European Union (EU) is responsible for 10.55% of the total greenhouse gas (GHG) emissions, the EU has requested the sector to implement measures to reduce GHG emission by 40% by 2030. The cost of these measures has increased the meat production and by-products prices, leading to a drop of beef production and the slaughter rate in the EU of 1-2% year-to-year since 2011. This drop is not only due to adjustment of production to face lower demand from higher prices, but to the lower meat consumer demand encouraged by stakeholders. According to Greenpeace, meat consumption in the EU should drop by 71% by 2030, and by 81% by 2050, to tackle farming's contribution to climate breakdown. Hence, EU tanners, which are highly dependent on meat production and raw material export markets, are already having difficulties accessing to European raw product.

With these concerns in mind, synthetic substitutes for leather have gained interest over the last years. Firstly produced in the early 1900s, synthetic leather only became popular in the 1960s as the manufacturing process was improved, and since then it has gradually replaced genuine leather in many fields. Synthetic leather (also commonly known as faux, artificial or imitation leather) is not made from animal skin or hide like genuine leather, but from natural and/or synthetic fibers, coated with a plastic polymer or similar. Though there are several materials used, most synthetic leathers consist of a knitted polyester base with a polyurethane (PU) and polyvinyl chloride (PVC) coating. Processing of these plastic-based products is still far from being environmentally friendly.

Animal leather will continue being a big source in the supply leather market, because it is a by-product of meat consumption, but is out of compliance with the EU legislation, that is expected to become more stringent with animal-based goods, and it will be requires bio alternative products.

Among different biotechnological approaches micro-cellulosic fiber networks produced by bacteria (e.g., *Acetobacter xylinum*) has been proposed for developing leather substitutes. Cellulose is the most abundant material in the world. It is a naturally occurring polymer in plants, but which can also be obtained from fungi, algae, and bacteria through biosynthetic processes. Most of the cellulose used in the industry is of vegetable origin; however, in the last twenty years, cellulose of bacterial origin has taken importance due to its excellent physical properties compared to that obtained naturally by plants, which make it attractive for specific applications. Bacterial cellulose (BC) has a wide variety of applications in the paper, textile, food, explosive and fermentable sugar industries, among others, in addition to specific applications in medicine and biotechnology, as well as in the manufacture of membranes used as separation agents.

BC is an extracellular biopolymer produced by different bacteria through a fermentation process, bacteria, especially those belonging to the genus *Komagataeibacter* (formerly known as *Acetobacter* and later renamed as *Gluconoacetobacter*). Under conditions of static culture, BC is produced as a gelatinous film whose 3D arrangement is pure cellulose nanofibrils with a structure formed by interconnected pores. One of the most important characteristics of BC is its purity, which distinguishes it from the vegetable cellulose usually associated with hemicellulose and lignin. Another feature is its high degree of crystallinity (greater than 60%) which, together with its 3D nanofibrillary architecture, makes it highly resistant to traction. It also has a high degree of polymerization, high water retention capacity and once purified, BC is non-toxic, non-allergenic, biocompatible and biodegradable.

Various studies suggest that this material has characteristics to be used in the leather industry as an alternative to natural and synthetic leather. The results obtained allow to envisage its use as a material for footwear and related accessories and its possible industrial production.

However, despite these promising results, the most important mechanical properties for materials used for leather articles such as shoes, gloves, and apparel goods are flex resistance, elongation, tensile strength and tear resistance. These parameters must be tailored to the particular use.

Regarding flex resistance, materials for shoes for instance must resist intensive bending and convex and concave deformation during usage. BacLeather^{®}, developed by Next-Gen Leather, fulfils the specification of >50.000 flex cycles according to UNE-EN ISO 17694:2016.

Tensile strength is a measure of a material's ability to resist breaking under tension.

Animal leather as the grown skin tissue shows a very high mechanical stability (tensile strength, tear strength), representing the highest value for the tensile strength and tear strength. Tensile strength of animal leather exceeds the specification of >15 N/mm² for chrome tanned upper leather for shoes (ISO 20942:2019).

Artificial leathers are made from a variety of materials, but usually are textiles coated with polyvinyl chloride (PVC) or polyurethane (PU), which are treated and coated to create a leather-like appearance and texture. Artificial leathers usually show tensile strengths of 9 up to 20 N/mm². The tensile strength of coated textiles depends mainly on the properties of the supporting fabric regardless of the natural or artificial origin of the fabric fibers.

Both animal leather and artificial leather have environmental issues associated with their production and disposal.

There are several ecofriendly or trendy alternatives to traditional animal leather that have emerged in recent years, such as mushroom leather, pineapple leather, and apple leather. However, in general, the mechanical features of these materials are not easily variable and normally always have a lower tensile strength than animal leather and artificial leather.

There is thus still a need for a new leather substitute approach that incorporates biobased materials and at the same time allows a simple adaptation of the mechanical resistance according to the specific needs of the final product.

### BRIEF DESCRIPTION OF THE INVENTION

The present invention provides a sheet-like material based on bacterial cellulose (BC) that can be used as a leather substitute. The material proposed is more respectful with the environment and may be advantageously obtained by means of an easy and cost-effective process applicable at industrial scale that avoids causing harm to animals and does not need highly pollutant chemicals. In particular, the inventors have found that the attachment of a fabric/textile to a layer of BC results in a resistant layered material suitable for the leather industry. Such a fabric gives high tensile strength properties to the BC without interfering with its good elongation properties. The combined use of both elements, fabric/textile and BC, makes possible to control and adapt the mechanical properties of the material in a very wide range.

In an aspect, the present invention relates to a material comprising:
- a layer of bacterial cellulose (BC); and
- a layer of a textile comprising fibers and/or yarns;
   wherein both layers are attached each other.

In another aspect the present invention relates to a method for preparing the material of the invention as above defined, said method comprising the following steps:
- providing a layer of bacterial cellulose (BC);
- providing a layer of a textile comprising fibers and/or yarns; and
- attaching both layers.

Further aspects of the invention relate to an article comprising the material of the invention as above defined and to the use of the same as leather substitute.

These aspects and preferred embodiments thereof are additionally also defined hereinafter in the detailed description and in the claims.

### BRIEF DESCRIPTION OF THE FIGURES

To better understand the invention, its objects and advantages, the following figures are attached to the specification in which the following is depicted:
**Figure 1** shows two pictures of an article (shoe) made of the material according to example 1, where a layer of BC was reinforced with a layer of cotton textile.
**Figure 2** shows two pictures of an article (handbag) made of the material according to example 2, where a layer of BC was reinforced with a layer of ethylene-vinyl acetate (EVA) foam.
**Figure 3** shows four pictures of an article (purse) made of the material according to example 3, where a layer of BC was reinforced with a layer of felt.
**Figure 4** shows three pictures of an article (notebook) covered or decorated with the material according to example 4, where a layer of BC was reinforced with a layer of linen textile.
**Figure 5** shows four pictures of two articles (notebook and box) covered or decorated with the material according to example 5, where a layer of BC was reinforced with a layer of cellulose.

### DETAILED DESCRIPTION OF THE INVENTION

Unless defined otherwise, all technical and scientific terms and expressions used herein have the same meaning as commonly understood to one of ordinary skill in the art to which this disclosure belongs.

As used herein, the term "about" means a slight variation of the value specified, preferably within 10 percent of the value specified. Nevertheless, the term "about" can mean a higher tolerance of variation depending on for instance the experimental technique used. Said variations of a specified value are understood by the skilled person and are within the context of the present invention. Further, to provide a more concise description, some of the quantitative expressions given herein are not qualified with the term "about". It is understood that, whether the term "about" is used explicitly or not, every quantity given herein is meant to refer to the actual given value, and it is also meant to refer to the approximation to such given value that would reasonably be inferred based on the ordinary skill in the art, including equivalents and approximations due to the experimental and/or measurement conditions for such given value.

By "room temperature" or its abbreviation "rt" is meant herein that the reactions or processes are performed without heating or cooling. Generally, by room temperature may be understood as a temperature between about 15 °C and about 30 °C, or more particularly between about 20 °C and about 25 °C.

Here, "sheet-like" refers to a shape whose average size in two spatial directions is much larger than the size of the third spatial direction which is orthogonal to the other spatial directions. Put another way, the term "sheet-like" refers to all forms of space whose thickness is considerably less than its length and width.

The terms "textile" and "fabric" are used herein interchangeably for simplicity and mean a material woven, knitted, felted, or otherwise produced from fibers and/or yarns.

The term "fiber" means a unit of matter which is capable of being spun into a yarn or made into a fabric by a variety of methods or techniques and which is the basic structural element of textiles.

The term "yarn" refers to a continuous strand of fibers.

Thus, fibers may be spun into yarn, and yarns are used to manufacture fabrics, but also fibers may be used directly to make a fabric without first being made into yarns.

Here the term "fiber" includes "filaments". Fibers and filaments have a great length in relation to their cross-section. Fibers, also called staple fibers normally have a length between 2-46 cm. The definition of a fiber according BISFA (The International Bureau for Standardisation of Man-made Fibres) *'a substances characterized by their flexibility, fineness, and high ratio of length to cross sectional area .* Filaments or filament fibers are fibers of "infinite length". All-natural fibers, except silk, are usually regarded as staple fibers. Synthetic fibers can be produced as filaments or cut into staple fibers. The definition of a filament according BISFA *'a fibre of very great length, considered* as *continuous'.*

Fibers can be classified based on various factors. With respect to its origin, fibers are commonly categorized as human-made (synthetic) or natural. Human-made fibers are produced by humankind. This group also includes semi-synthetic fibers. Raw materials like oil or wood are produced into a chemical solution, from which fibers are drawn. For example polyester, that may be made from oil, or lyocell that may be made from wood. These fibers are made true a chemical process. So, the fiber or filament shape is obtained by a manufacturing process.

Natural fibers, on the other hand, are obtained from plants, animals or minerals. Natural fibers already exist in nature in its fiber or filament shape. For example wool that grow as fur on sheep, cotton that grow on plants or silk that is created by silkworms.

Thus, fabrics / textiles are planar (sheet-like) structures made from fibers (and/or from yarns, which are made in turn from fibers) by means of different techniques. These techniques include, but are not limited to, weaving, knitting, felting, bonding, braiding, twisting, webbing, macrame, crochet, and embroidery. These and any other technique for creating fabrics known for the skilled person in the art are contemplated in the present invention.

Basically, there are three main methods by which fabrics are made which results in that fabrics can be sorted into three broad classes:
- Weaving Process: Weaving is the intersection of two sets of straight yarns, warp and weft, which cross and interlace to each other. The lengthwise yarns are known as warp yarns and width wise yarns are known as weft or filling yarns and the fabric produced is known as woven fabric. Thus, woven fabrics may be defined as fabrics composed of warp yarns (longitudinal) and weft yarns (transverse) that are interlaced at according to the type of weave or design that are desired. It can be done on a variety of looms, including hand looms, floor looms, and computerized looms.
   ∘ Plain weave: Also known as tabby weave, this is the simplest weaving technique. It is created by interlacing warp and weft threads over and under each other in an alternating pattern.
   ∘ Twill weave: This weave creates a diagonal pattern on the fabric. It is created by passing the weft thread over one or more warp threads, and then under two or more warp threads, and repeating the pattern: e.g. sarga and denim.
   ∘ Satin weave: This weave creates a smooth, shiny fabric with a soft drape. It is created by passing the weft thread over several warp threads and then under one, creating long floats on the surface of the fabric.
   ∘ Jacquard weave: This is a complex weave that creates intricate patterns and designs. It is created using a Jacquard loom, which allows for individual control of each warp thread.
   ∘ Dobby weave: This is a decorative weave that creates geometric patterns on the fabric. It is created using a dobby loom, which allows for the selective raising of warp threads.
   ∘ Leno weave: This weave creates an open, lacy fabric. It is created by twisting pairs of warp threads together and passing the weft thread between them.
   ∘ Basket weave: This is a simple weave that creates a sturdy fabric. It is created by weaving multiple weft threads over and under two or more warp threads at a time.
   ∘ Huck weave: This is a textured weave that creates a waffle-like pattern on the fabric. It is created by alternating warp and weft floats.
   ∘ Tapestry weave: This is a weft-faced weave that is used to create intricate designs and images. It is created by weaving the weft threads tightly together to completely cover the warp threads.
   ∘ Double weave: This is a weave that creates a reversible fabric with two layers. It is created by weaving two layers of fabric at the same time, with a connecting layer of warp threads between them.
- Knitting Process: Knitting consists of forming yarns into loops, each of which is typically only released after a succeeding loop has been formed and intermeshed with it so that a secure ground loop structure is achieved. The fabric produced is known as knit fabric.
- Non-woven Process: In this method, fabrics are made of fibers (or filaments) held together by bonding (e.g. by an applied bonding agent or by the fusing of self-contained thermoplastic fibers) or by interlocking (felting). The fabric produced is known as non-woven fabric or simply non-wovens.

Additional particular examples of useful techniques are the following:
- Braiding: This is a technique of interlacing three or more strands of yarn, thread, or other materials to create a cord or a flat braid. It can be done by hand or using a braiding machine.
- Twisting: This is a technique of twisting two or more strands of yarn, thread, or other materials together to create a cord or rope. It can be done by hand or using a twisting machine.
- Webbing: This is a technique of weaving flat, narrow strips of fabric to create a strong, durable webbing. It is often used in belts, straps, and other types of outdoor gear.
- Macrame: This is a technique of knotting cords or threads to create decorative patterns or functional items such as plant hangers or wall hangings.
- Crochet: This is a technique of creating fabric by looping yarn or thread using a crochet hook. It can be used to create intricate lace patterns, among other designs.
- Embroidery: This is a technique of decorating fabric using needle and thread. It can be used to create decorative patterns, monograms, and pictures on fabric.

Biomaterial or bio-based material refers to a material whose main constituent consists of a substance, or substances, originally derived from living organisms (e.g. plants, microbes), or components of them (e.g. enzymes), or biochemicals (i.e. chemicals found naturally in the living organisms such as sucrose, glucose, starch or natural polyesters).

Biodegradable material (e.g. biodegradable cotton) refers to a material which degrades under biological (mainly microbial) action. Some biodegradable materials are compostable (but not all), which means they degrade under aerobic conditions usually within a time frame of about 6-12 weeks. Composting of industrial products usually takes place in industrial composting plants, where controlled conditions (e.g. temperature, humidity, aeration) are given. Microbes, like bacteria or fungi and their enzymes, are able to "digest" the chain structure of compostable polymers as a source of nutrition. The resulting end products are water, carbon dioxide CO₂ and a little biomass. For instance, cellulose, cotton, linen, wool, linen and hemp are biobased, biodegradable and can be considered compostable.

The material of the invention is a sheet-like material suitable as leather substitute. The leather-like sheet as herein proposed comprises at least the following layers:
- bacterial cellulose (BC);
- textile made from fibers and/or yarns;
   wherein both layers are bonded each other e.g. by means of an intermediate layer or through any chemical or mechanical modification of said layers.

For its practical application as leather alternative material, said material is disposed in the finished article such that it comprises, in order from the exterior to the interior, the layer of bacterial cellulose (BC) and the layer of textile. Other optional layers may be present, such as one or more intermediate layers (e.g. adhesive), one or more outermost layers and/or one or more innermost layers.

Preferably, one, more or all of the substances that made up the leather-like material of the invention are biobased or biodegradable. More preferably, one, more or all of the substances that made up the leather-like material of the invention are biobased and biodegradable. Even more preferably, one, more or all of the substances that made up the leather-like material of the invention are biobased and compostable.

Cellulose produced by bacteria, has grown in popularity since its discovery in 1886 due to its special properties, such as high purity, an ultrafine and highly crystalline network structure, a superior mechanical strength, biodegradability, biocompatibility, large water-holding capacity (WHC) and good chemical stability. BC is over 10-times stronger than plant-based cellulose. It is currently used to create materials for tissue engineering, medicine, defense, electronics, acoustics, and fabrics.

BC can be produced in different forms based on different fermentation conditions. Many sugars and sugar alcohols can be utilized as carbon source, the most important fermentation source, for BC production. Several studies have been developed to produce BC on an industrial scale, with a continuous or semicontinuous process, low-cost raw materials and small production of by-products.

In the present invention, BC may be obtained according to any known procedure in the state of the art such as those described for instance in or in the references cited therein: Florea, M., Hagemann, H., Santosa, G., Abbott, J., Micklem, C.N., Spencer-Milnes, X., et al. (2016) Engineering control of bacterial cellulose production using a genetic toolkit and a new cellulose-producing strain. Proc Natl Acad Sci USA 113, E3431-E3440. Islam, M.U., Ullah, M.W., Khan, S., Shah, N., and Park, J.K. (2017) Strategies for cost-effective and enhanced production of bacterial cellulose. Int J Biol Macromol 102: 1166-1173. Kubiak, K., Kurzawa, M., Jezdrzejczak-Krzepkowska, M., Ludwicka, K., Krawczyk, M., Migdalski, A., et al. (2014) Complete genome sequence of Gluconacetobacter xylinus E25 strain-valuable and effective producer of bacterial nanocellulose. J Biotechnol 20: 18-19. Lee, K.Y., Buldum, G., Mantalaris, A., and Bismarck, A. (2014) More than meets the eye in bacterial cellulose: biosynthesis, bioprocessing, and applications in advanced fiber composites. Macromol Biosci 14: 10-32. Andréa Fernanda De Santana Costa, Maria Alice Vasconcelos Rocha, and Leonie Asfora Sarubbo. (2017) Review - Bacterial Cellulose: An Ecofriendly Biotextile. International Journal of Textile and Fashion Technology (IJTFT) 7: 11-26. Campano, C., Balea, A., Blanco, A. et al. (2016) Enhancement of the fermentation process and properties of bacterial cellulose: a review. Cellulose 23: 57-91. Costa, A., Almeida, F., Vinhas, G. M., & Sarubbo, L. A. (2017). Production of Bacterial Cellulose by Gluconacetobacter hansenii Using Corn Steep Liquor As Nutrient Sources. Frontiers in microbiology 8: 2027. Faezah Esa, Masrinda Tasirin, Norliza Abd Rahman (2014) Overview of Bacterial Cellulose Production and Application. Agriculture and Agricultural Science Procedia 2: 113-119. Moniri, M., Boroumand Moghaddam, A., Azizi, S., Abdul Rahim, R., Bin Ariff, A., Zuhainis Saad, W., Navaderi, M., Mohamad, R. (2017). Production and Status of Bacterial Cellulose in Biomedical Engineering. Nanomaterials, 7(9): 257. Picheth GF, Pirich CL, Sierakowski MR, Woehl MA, Sakakibara CN, de Souza CF, Martin AA, da Silva R, de Freitas RA. (2017) Bacterial cellulose in biomedical applications: A review. Int J Biol Macromol. 104: 97-106. Kaiyan Qiu & Anil N. Netravali (2014) A Review of Fabrication and Applications of Bacterial Cellulose Based Nanocomposites, Polymer Reviews, 54:4, 598-626. Reiniati I, Hrymak AN, Margaritis A. (2017) Recent developments in the production and applications of bacterial cellulose fibers and nanocrystals. Crit Rev Biotechnol. 37(4):510-524.

In a particular embodiment of the invention, the method for producing BC comprises (i) culturing in a culture medium one or more bacterial strains which are capable of accumulating BC and (ii) recovering the BC produced from the culture medium.

BC may be for instance produced by bacteria of the genera *Komagataeibacter* (formerly known as *Acetobacter* and later renamed as *Gluconoacetobacter*), *Agrobacterium, Achromobacter, Aerobacter, Enterobacter, Sarcina, Rhizobium, Pseudomonas, Salmonella, Alcaligenes and Myxedema.* In a more particular embodiment, BC is obtained by bacteria of the genus *Komagataeibacter* such as *Komagataeibacter xylinus, Komagataeibacter hansenii, Komagataeibacter kombuchae, Komagataeibacter intermedius.* Even more particularly, the BC-producing microorganism is a bacterial strain of *Komagataeibacter xylinus.* Important strains useful of K. *xylinus* for the production of BC include, but are not limited to, K3, BPR 2001, KU1, FC01, ATCC 53524, and MTCC 2623.

In a preferred embodiment, BC is obtained from a symbiotic culture of bacteria and yeast (SCOBY) comprising at least one type of BC-producing bacteria and at least one yeast type. Suitable bacteria for the SCOBY include, but are not limited to, those mentioned in the previous paragraph. More preferably, the symbiotic culture comprises at least one bacterial strain of the genus *Komagataeibacter,* preferably of the species *Komagataeibacter xylinus.* Suitable yeasts for the SCOBY include, but are not limited to, *Zygosaccharomyces rouxii* or *Brettanomyces bruxellensis* and *Candida sp.* Even more preferably, the symbiotic culture comprises at least one bacterial strain of the genus *Komagataeibacter,* preferably of the species *Komagataeibacter xylinus,* and the yeasts *Zygosaccharomyces rouxii* or *Brettanomyces bruxellensis* or *Candida sp.,* preferably *Brettanomyces bruxellensis.*

Culture media suitable for the production of BC are well known in the art. Usually said culture media comprise carbon sources, such as, for example, glucose, sucrose, fructose, glycerin, mannitol or arabitol and suitable nitrogen sources such as, for example, yeast extract and peptone.

In a particular embodiment, the SCOBY may be cultured in a medium comprising tea infusion like black or green tea as a source of nitrogen and a sugar (e.g. sucrose) as carbon source. In a more particular embodiment, the process for producing BC may be as follows: a black or green tea infusion is prepared by placing tea leaves in boiling water (e.g. about 2 g to about 6 g of tea leaves per liter of water). After about 10-20 minutes, tea leaves are withdrawn and the carbon source is added (e.g. 70 - 90 g/l sucrose). When the temperature decreases (e.g. below about 30 °C), the mixture is thrown into a bucket, such as one of about 0.09 m² (i.e. 1 square foot) in area which is the standard piece used in footwear industry. Then, the SCOBY is added in suspension (e.g. 5% - 15% v/v) and the buckets are covered with a filter such as filter paper. Fermentation normally takes place in about 10 - 20 days at a temperature of about 25 °C - 35 °C. Then, the sheets of BC are taken and washed with water or soapy water. Preferably, several washes are carried out, after which the sheets of BC may be purified by known procedures: for instance, the sheets may be immersed in a 2% potassium hydroxide solution for about 60 - 120 minutes at about room temperature with oscillating agitation for the elimination of impurities and cell debris, followed by a neutralization treatment with acid (e.g. acetic acid) for about 15 to 45 minutes at about room temperature. Subsequently, the sheets of BC may be dried vertically for about 24 hours at about 35 °C.

Instead of small buckets (e.g. 30 x 30 cm which approximately corresponds to 1 square foot) it is possible to use larger containers to obtain large-format BC sheets which may be subsequently divided up into individual sheets of the desired size.

Typically, the average thickness of the BC layer ranges from about 0.2 mm to about 1.2 mm (e.g. about 0.3, 0.4, 0.5, 0.6, 0.7, 0.8, 0.9, 1.1 mm). In a particular embodiment, the BC layer is about 0.6 mm in average thickness.

The layer/sheet of bacterial cellulose may be optionally dyed. A wide variety of commercial dyes are available in the leather industry and applicable in the present invention including for instance azo dyes and natural dyes. Preference is given to ecofriendly and non-toxic dyes that can be used to provide a full variety of colors. In a preferred embodiment, the BC is colored with a natural dye such as for instance urucum, cochineal carmine, turmeric, saffron, and beet. The dye may be added for instance to the fermentation bath during fermentation such that color is successfully incorporated into the BC layer. Alternatively, the dye may be added to a previously formed BC layer.

The material of the invention, besides the layer of bacterial cellulose, also comprises at least one layer of textile or fabric. The fabric confers high resistance features to the sheet of BC and allows obtaining a smoother appearance.

The structural characteristic of the fabric layer is determined by its composition (type of fibers) and by its pattern, which refers to the way in which the individual fibers form the fabric. For instance, common weave patterns include plain weave, twill weave, and satin weave, each of which produces a distinct texture and structural characteristic in the fabric.

In an embodiment, the layer of textile is obtainable by one or more techniques selected from the group consisting of weaving, knitting, felting, bonding, braiding, twisting, webbing, macrame, crochet, and embroidery fibers and/or yarns.

In an embodiment, the layer of textile is selected from a woven fabric, a knit fabric, a non-woven fabric or a combination thereof. In a particular embodiment, the non-woven fabric is obtainable from fibers and/or yarns that are felt or bonded together or a combination thereof. Accordingly, in a particular embodiment, the layer of textile is obtainable by one or more techniques selected from the group consisting of weaving (interlacing), knitting (interlooping), felting (interlocking) or bonding fibers and/or yarns. In a more particular embodiment, the layer of textile is obtainable by weaving (interlacing), and more particularly by twill weave.

The fibers comprised in the layer of textile may be natural, synthetic or a combination thereof. Similarly, the yarns comprised in the layer of textile may be made from natural, synthetic or a combination of natural and synthetic fibers.

Natural fibers exist as they are found in nature, and can be of animal, vegetable or mineral nature. These fibers (especially, plant- and animal-based fibers) are often preferred for their breathability, softness, and durability. Examples of natural fibers useful in the present invention, include but are not limited to, plant-based fibers (e.g. cotton, linen, hemp, jute, ramie, cellulose), animal-based fibers (e.g. silk, wool, cashmere, mohair, alpaca, angora), and mineral-based fibers (e.g. asbestos), or a combination thereof. Some features of some of these materials are shown below:
- Cotton: Soft and breathable, good for everyday wear and warm weather.
- Silk: Luxurious and lightweight, often used for formal wear and drapery.
- Wool: Warm and insulating, great for winter clothing and home décor.
- Linen: Strong and durable, often used for summer clothing and home décor.
- Hemp: Sustainable and durable, often used for casual clothing and home décor.

Synthetic fibers are man-made and produced from chemical compounds. Synthetic fibers are often preferred for their strength, elasticity, and resistance to moisture and wrinkles. Examples of synthetic fibers and/or yarns useful in the present invention, include but are not limited to, polyester, nylon, rayon, spandex, acrylic, polypropylene (PP), polyvinyl chloride (PVC), polyurethane (PU), poly lactic acid (PLA), ethylene-vinyl acetate (EVA) foam, olefin, bamboo, lyocell (e.g. Tencel^{®}), cupro, modal, viscose, azlon (soy milk), milk fiber, fiberglass, ceramic fibers, etc. or a combination thereof. Some features of some of these materials are shown below:
- Polyester: Durable and easy to care for, often used for activewear and home décor.
- Nylon: Strong and lightweight, often used for outdoor and athletic clothing.
- Rayon: Soft and drapable, often used for dresses and blouses.
- Spandex: Stretchy and form-fitting, often used for activewear and undergarments.

Non-woven fabrics are produced by bonding fibers together through various methods, such as heat, chemicals, or pressure. They are often used in disposable products, such as medical gowns, wipes, and masks. Fibers either synthetic or natural especially suitable for non-woven fabrics include, but are not limited to wool felt, cellulose (both bacterial and plant cellulose), PP, nylon, polyester, PVC, PU, PLA, EVA foam, etc. or a combination thereof. Some features of some these materials are shown below:
- Wool felt: Soft and malleable, often used for crafts and home décor.
- Polypropylene: Strong and lightweight, often used for bags and outdoor gear.
- Polyester: Versatile and easy to clean, often used for home décor and packaging.

In a particular embodiment, the textile comprises fibers and/or yarns selected from the group consisting of cotton, linen, hemp, jute, ramie, cellulose, silk, wool, cashmere, mohair, alpaca, angora, asbestos, polyester, nylon, rayon, spandex, acrylic, polypropylene (PP), polyvinyl chloride (PVC), polyurethane (PU), poly lactic acid (PLA), ethylene-vinyl acetate (EVA) foam, olefin, bamboo, lyocell (e.g. Tencel^{®}), cupro, modal, viscose, azlon (soy milk), milk fiber, fiberglass, ceramic fibers, Non-woven PET, Non-woven PLA, Non-woven Cellulose, Non-woven Polyester, Non-woven PP, Non-woven Woolfelt or a combination thereof.

In a particular embodiment, the textile comprises fibers and/or yarns selected from the group consisting of cotton, linen, hemp, jute, ramie, cellulose, silk, wool, cashmere, mohair, alpaca, angora, polyester, nylon, rayon, spandex, acrylic, polypropylene (PP), polyvinyl chloride (PVC), polyurethane (PU), poly lactic acid (PLA), ethylene-vinyl acetate (EVA) foam, olefin, bamboo, lyocell (e.g. Tencel^{®}), cupro, modal, viscose, azlon (soy milk), milk fiber, or a combination thereof.

In a particular embodiment, the textile comprises fibers and/or yarns selected from the group consisting of plant-based fibers, more particularly cotton, linen, hemp, jute, ramie, cellulose, or a combination thereof.

In a particular embodiment, the textile comprises fibers and/or yarns selected from the group consisting of animal-based fibers, more particularly silk, wool, cashmere, mohair, alpaca, angora, or a combination thereof.

In a particular embodiment, the textile comprises fibers and/or yarns selected from the group consisting of synthetic fibers, more particularly polyester, nylon, rayon, spandex, acrylic, polypropylene (PP), polyvinyl chloride (PVC), polyurethane (PU), poly lactic acid (PLA), ethylene-vinyl acetate (EVA) foam, olefin, bamboo, lyocell (e.g. Tencel^{®}), cupro, modal, viscose, or a combination thereof.

In a more particular embodiment, the textile comprises fibers and/or yarns selected from the group consisting of acrylic and plant-based fibers or a combination thereof, wherein the plant-based fibers are preferably selected from linen, hemp, cotton, or a combination thereof. A particularly useful form of cotton is sarga. Linen, hemp, acrylic and cotton (sarga) have been found very suitable for application of the invention in the footwear industry since the resulting material complies with the recommend values for the upper of casual footwear for men and women.

In another particular embodiment, the textile comprises cotton (sarga), felt, linen, plant cellulose or a combination thereof.

The layers of BC and textile are bonded/attached by any means that allows keeping both layers together and resists their separation. In an embodiment, the layers of BC and textile are bonded by means of an adhesive layer. This may be carried out by applying an adhesive over the layer of BC (or dyed BC, if a dye has been used for coloring), over the textile layer or over both. The adhesive is preferably applied over the whole surface of the BC layer (or dyed BC), over the whole surface of the textile layer or over the whole surfaces of the both layers to be bonded. The adhesive may be applied for instance by spray gun, brush or paint roller. The resulting layered material may be subjected to pressure for a time sufficient (e.g. at least 2, 4, 6 or 8 h) to improve the bonding quality. Pressure can be applied by mechanical means, such as by a press.

Materials useful for the adhesive layer in the present invention may be adhesives commonly used in the leather industry, the footwear industry or the binding industry and are preferably selected from water-based adhesives and biopolymer-based adhesives. Water-based adhesives include the aqueous dispersions of homopolymers and copolymers of various polymeric compositions such as polyurethanes, polychloroprenes, latex, etc. In a particular embodiment, the adhesive is a polyurethane or a polychloroprene adhesive. In another particular embodiment, the adhesive is a biopolymer-based adhesive, e.g. carboxymethyl cellulose (CMC).

Alternatively, the layers of BC and textile may be bonded by chemically or mechanically modifying any or both of said layers. For example, the layers of BC and textile may be bonded modifying any or both of said layers using physical adsorption (coating of biomaterial surfaces with cell adhesive proteins like fibronectin, vitronectin, collagen or laminirn, or extracellular matrix resembling molecules such as chitosan and gelatin), chemical treatment (e.g. a commonly used chemical modification method is the alkali hydrolysis of aliphatic polyester surfaces), modification via plasma treatment with a low-pressure gas or photochemical techniques that use high-energy protons to initiate chemical reactions.

The quality assessment on the production of the leather substitute of the invention may be done through physical validations in accordance with accepted standards (EN, ISO, etc.) such as determination of thickness (mm) according to ISO 2589:2003, determination of tear resistance according to UNE-EN ISO 17697:2016 (method A) and determination of tensile strength & elongation according to UNE-EN ISO 17706:2018).

Tensile strength (also known as ultimate tensile strength) is the capacity of a material or structure to withstand loads tending to elongate it. Tensile strength determines the maximum tensile stress/tension that the material can sustain without fracture. The Tensile strength is a key factor for designers and buyers as it signifies the point of failure resulting from the stretching of the material. Quantitatively, this can be expressed as the force required to rupture a material specimen of unit cross sectional area. The acceptable minimum tensile strength depends on the leather end uses or applications. In certain embodiments, the tensile strength of the material of the invention is at least 1 N/mm, 2 N/mm, 3 N/mm, 4 N/mm, 5 N/mm, 6 N/mm, 7 N/mm, 8 N/mm, 9 N/mm, 10 N/mm, 11 N/mm, 12 N/mm, 13 N/mm, 14 N/mm or 15 N/mm.

Elongation refers to the ability of a material to lengthen/stretch when stress is applied to it and represents the maximum extent the material can stretch without breaking. In leather, this is an important quality parameter to be considered, because a low elongation value results in easy tear while a high elongation value causes leather goods to become deformed very quickly or even lose usability. In certain embodiments, the percentage of elongation of the material of the invention is at least 10%, 15%, 20%, 25%, 30%, 35%, 40%, 45%, 50%, 55%, 60%, 65% or 70%.

Tear strength (also known as tear resistance) is a measure of how well a material can withstand the effects of tearing. It specifically measures a material's resistance to the growth of any cuts when under tension, measured in N/mm. In the leather fracture behavior, deformation and crack growth, this strength measures the resistance to the formation of a tear (tear initiation) and its corresponding expansion or growth (tear propagation within the structure). In certain embodiments, the tear strength of the material of the invention is at least 1 N, 5 N, 10 N, 15 N, 20 N, 25 N, 30 N, 35 N, 40 N, 45 N, 50 N, 55 N, 60 N, 65 N, 70 N, 75 N, 80 N, 85 N, 90 N or 95 N.

In a particular embodiment, the material of the invention meets the recommended values by the UNE 59900:2014, UNE 59910:2014 and UNE-CEN ISO/TR 20879 IN:2008 standards for the upper of casual footwear for men and women: Tear resistance (≥ 25 N), Tensile strength (≥ 10 N/mm), Elongation (≥ 15%). As mentioned previously, when used a textile layer comprising linen, hemp, acrylic or cotton (sarga), the material of the invention meets said recommended values.

The ease of the manufacture method, the non-toxic and biodegradable ingredients used and their availability at industrial scale allow this technology to be implemented in the leather industry on a large scale. The material of the invention finds practical application as leather substitute in a variety of areas such as the textile, clothing, apparel, footwear, furniture and transport sectors. Thus, the invention is also directed to articles or products, particularly footwear, comprising the leather substitute material as herein proposed. Examples of articles in which the leather substitute material may be comprised include any leather goods, being not limited to, footwear, furniture, upholstery, bags, purses, luggage, gloves, belts, wallets, clothing, automotive interiors (e.g. automotive leather seats), interior decoration (home décor), packaging, equestrian leather articles, books, notebooks and stationary. In these articles the leather alternative material of the invention comprises an outer layer of bacterial cellulose and an inner layer of a textile. Additionally, one or more additional layers may be also applied including one or more intermediate layers to attach the layer of bacterial cellulose and the layer of textile, one or more layers above the layer of bacterial cellulose and/or one or more layers under the layer of textile.

It should be understood that the scope of the present disclosure includes all the possible combinations of embodiments disclosed herein.

The following examples are merely illustrative of certain embodiments of the invention and cannot be considered as restricting it in any way.

### EXAMPLES

### Example 1 - Preparation of reinforced leather substitute with cotton textile (sarga)

A layer of bacterial cellulose was obtained from a symbiotic culture of bacteria and yeast (SCOBY) composed of *Komagataeibacter xylinus* bacteria and the yeasts *Brettanomyces bruxellensis.* A green tea infusion was prepared by placing 8 g of tea leaves in 2 liters of boiling water. After about 15 minutes, tea leaves were withdrawn and sucrose 80 g/l was added as carbon source. Once the temperature was below 30 °C, the mixture was thrown into a 0.09 m² (i.e. 1 square foot) bucket. Then, the SCOBY was added in suspension (10% v/v) and the buckets were covered with a filter paper. Fermentation took place in 15 days at a temperature of 30 +/- 3°C. Then, the sheets of BC were taken and washed with soapy water several times during 12 h. The BC sheets were immersed in a 2% potassium hydroxide solution for about 90 min at 25 °C with oscillating agitation for the elimination of impurities and cell debris, followed by a neutralization treatment with acetic acid (pH 3.0) for 30 minutes at 25 °C. Subsequently, the sheets of BC were dried vertically for 24 hours at 35 °C.

A layer of cotton textile was bonded to the layer of BC by means of adhesive, by application of pressure for at least 6 hours.

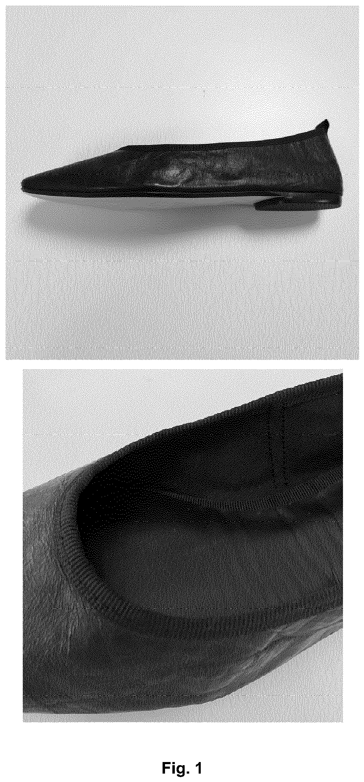

The resulting material was suitable as leather substitute *inter alia* for the leather clothing and footwear industry. By way of example, **Figure 1** shows two pictures of a shoe made of this material.

### Example 2 - Preparation of reinforced leather substitute with foam

Bacterial cellulose was obtained as disclosed in example 1 but using ethylene-vinyl acetate (EVA) foam as reinforcing material. The layers were bonded as disclosed in example 1.

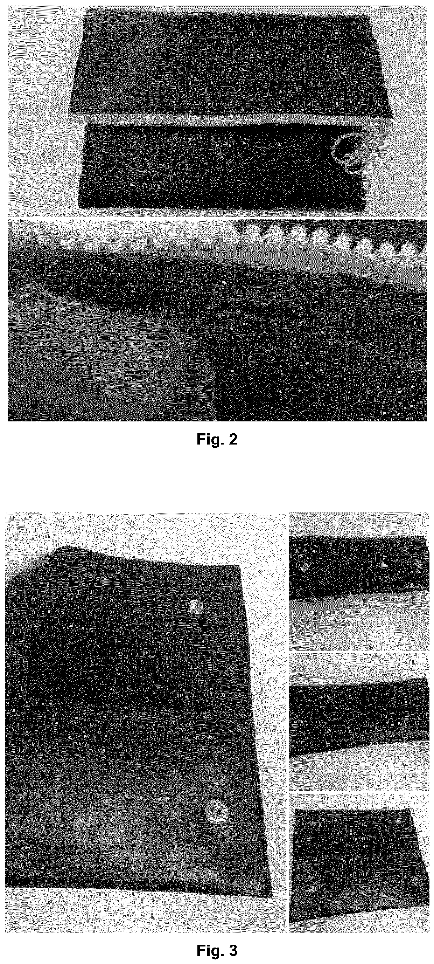

The resulting material was suitable as leather substitute *inter alia* for the leather goods industry. By way of example, **Figure 2** shows pictures of a handbag made of this material.

### Example 3 - Preparation of reinforced leather substitute with felt

Bacterial cellulose was obtained as disclosed in example 1 but using felt as reinforcing material. The layers were bonded as disclosed in example 1.

The resulting material was suitable as leather substitute *inter alia* for the leather industry. By way of example, **Figure 3** shows pictures of a purse made of this material.

### Example 4 - Preparation of reinforced leather substitute with linen textile

Bacterial cellulose was obtained as disclosed in example 1 but using linen textile as reinforcing material. The layers were bonded as disclosed in example 1.

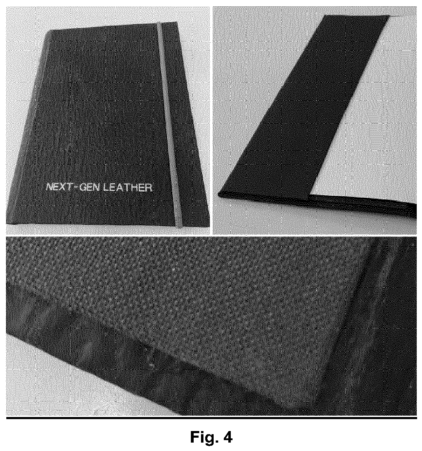

The resulting material was suitable as leather substitute *inter alia* for the home deco/binding industry. By way of example, **Figure 4** shows pictures of a notebook covered or decorated with this material.

### Example 5 - Preparation of reinforced leather substitute with cellulose

Bacterial cellulose was obtained as disclosed in example 1 but using plant cellulose (cardboard) as reinforcing material. The layers were bonded as disclosed in example 1.

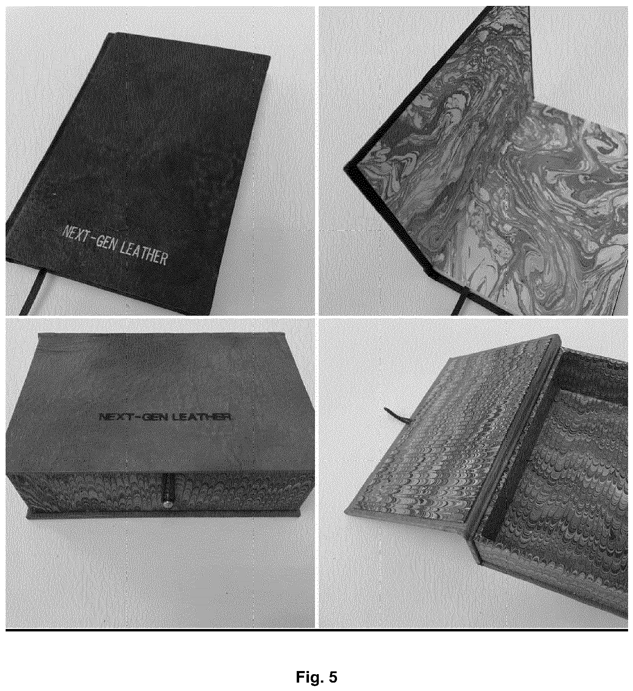

The resulting material was suitable as leather substitute *inter alia* for the home deco/binding industry/leather goods industry (e.g. as bases for bags). By way of example, **Figure 5** shows pictures of a notebook and a box covered or decorated with this material.

### Example 6 - Determination of Tensile Strength, Elongation at Break and Tear Resistance

The Tensile Strength, Elongation at Break and Tear Resistance of samples of 24 different materials encompassed by the present invention was determined in accordance with the following tests used in the footwear sector: Tear resistance for uppers (UNE-EN ISO 17697:2016, method A) Tensile strength & elongation upper (UNE-EN ISO 17706:2018).

All these samples were made up by a layer of bacterial cellulose (prepared as shown in example 1) attached to a layer of textile by means of carboxymethyl cellulose adhesive. A sample consisting of a layer of bacterial cellulose was used as control.

The following table shows the results obtained in the tests. As can be appreciated, the mechanical properties vary depending on the specific textile layer and the manufacturing process used showing that the material proposed in the present invention can be tailored to meet the requirements of its end use. For instance, the use of linen, hemp, acrylic and sarga as textile layer allowed obtaining leather alternative materials especially suitable in the footwear sector in compliance with the recommended values by the UNE 59900:2014, UNE 59910:2014 and UNE-CEN ISO/TR 20879 IN:2008 standards for the upper of casual footwear for men and women: Tear resistance (≥ 25 N), Tensile strength (≥ 10 N/mm), Elongation (≥ 15%). Other types of textile layers are useful for preparing leather alternative materials appropriate for other applications, such as for the textile, clothing, apparel, furniture or transport sectors, where the mechanical requirements are not as demanding as in the footwear industry.

| **Sample** | **Textile layer** | **Tensile Strength (N/mm)** | **Tensile strength increase (%)** | **Elongation (%)** | **Elongation increase (%)** | **Tear resistance (N)** | **Tear resistence increase (%)** |
|---|---|---|---|---|---|---|---|
| Control | None | 5.66 | - | 38 | - | 5.66 | - |
| 1 | Gasa (100% polyester) | 8.66 | 52.88 | 61 | 60.53 | 8.66 | 52.88 |
| 2 | Crepe (97% polyester, 3% spandex) | 8.31 | 46.79 | 59 | 55.26 | 8.31 | 46.79 |
| 3 | Rayon (100% rayon, 70 g/m²) | 11.23 | 98.40 | 41 | 7.89 | 11.23 | 98.40 |
| 4 | Organza (100% polyester) | 8.99 | 58.84 | 43 | 13.16 | 8.99 | 58.84 |
| 5 | Tul OEKO TEX (100% nylon) | 5.69 | 0.45 | 54 | 42.11 | 5.69 | 0.45 |
| 6 | Lycra (82% polyamide, 18% elastane) | 4.87 | -14.03 | 70 | 84.21 | 4.87 | -14.03 |
| 7 | New Milano (100% polyester) | 12.67 | 123.82 | 59 | 55.26 | 12.67 | 123.82 |
| 8 | Batista POPELIN (100% cotton) | 16.58 | 192.75 | 41 | 7.89 | 16.58 | 192.75 |
| 9 | COTTON VOILE OPTICAL WHITE (100% cotton) | 12.98 | 129.29 | 54 | 42.11 | 12.98 | 129.29 |
| 10 | Linen washed (100% linen) | 15.33 | 170.72 | 28 | -26.32 | 41.1 | 542.2 |
| 11 | Silk | 7.48 | 32.03 | 26 | -31.58 | 29.6 | 362.5 |
| 12 | Hemp | 12.29 | 116.96 | 21 | -44.74 | 35.0 | 446.9 |
| 13 | Wool | 7.26 | 28.22 | 58 | 52.63 | 50.4 | 687.5 |
| 14 | Acrylic | 15.37 | 171.48 | 27 | -28.95 | 95.6 | 1393.8 |
| 15 | Lyocell | 10.80 | 90.64 | 27 | -28.95 | 12.4 | 93.8 |
| 16 | Tul (polyester) | 4.83 | -14.66 | 61 | 60.53 | 37.3 | 482.8 |
| 17 | Non-woven PET | 6.30 | 11.32 | 45 | 18.42 | 28.5 | 345.3 |
| 18 | Non-woven PLA | 6.08 | 7.37 | 41 | 7.89 | 13.8 | 115.6 |
| 19 | Non-woven Cellulose | 6.44 | 13.81 | 43 | 13.16 | 16.9 | 164.1 |
| 20 | Non-woven Polyester | 9.53 | 68.26 | 21 | -44.74 | 38.7 | 504.7 |
| 21 | Non-woven PP | 8.65 | 52.75 | 20 | -47.37 | 12.2 | 90.6 |
| 22 | Non-woven Woolfelt | 6.11 | 7.94 | 74 | 94.74 | 54.5 | 752.0 |
| 23 | Denim (cotton) | 9.32 | 64.66 | 46 | 21.05 | 37.1 | 479.7 |
| 24 | Sarga (cotton) | 13.36 | 135.86 | 36 | -5.26 | 29.7 | 364.1 |

## Claims

1. A material comprising:
- a layer of bacterial cellulose (BC); and
- a layer of a textile comprising fibers and/or yarns;
wherein both layers are attached each other.

2. The material according to claim 1, wherein the BC layer is obtainable from a symbiotic culture of bacteria and yeast (SCOBY) comprising at least one type of BC-producing bacteria and at least one yeast type, preferably wherein the SCOBY comprises at least one bacterial strain of *Komagataeibacter xylinus* and the yeast *Brettanomyces bruxellensis*

3. The material as claimed in any one of claims 1 to 2 wherein the textile is obtainable by one or more techniques selected from the group consisting of weaving, knitting, felting, bonding, braiding, twisting, webbing, macrame, crochet, and embroidery fibers and/or yarns.

4. The material as claimed in any one of claims 1 to 2 wherein the textile is selected from a woven fabric, a knit fabric, a non-woven fabric or a combination thereof, preferably a woven fabric.

5. The material as claimed in any one of claims 1 to 4 wherein the textile is obtainable by one or more techniques selected from the group consisting of weaving, knitting, felting or bonding fibers and/or yarns, preferably weaving.

6. The material according to any one of the preceding claims, wherein the textile comprises natural, synthetic or a combination of natural and synthetic fibers and/or wherein the textile comprises yarns made from natural, synthetic or a combination of natural and synthetic fibers.

7. The material according to any one of the preceding claims, wherein the textile comprises fibers and/or yarns selected from the group consisting of cotton, linen, hemp, jute, ramie, cellulose, silk, wool, cashmere, mohair, alpaca, angora, asbestos, polyester, nylon, rayon, spandex, acrylic, polypropylene (PP), polyvinyl chloride (PVC), polyurethane (PU), poly lactic acid (PLA), ethylene-vinyl acetate (EVA) foam, olefin, bamboo, lyocell, cupro, modal, viscose, azlon (soy milk), milk fiber, fiberglass, ceramic fibers, Non-woven PET, Non-woven PLA, Non-woven Cellulose, Non-woven Polyester, Non-woven PP, Non-woven Woolfelt or a combination thereof.

8. The material according to any one of the preceding claims, wherein the textile comprises fibers and/or yarns selected from the group consisting of acrylic and plant-based fibers or a combination thereof, wherein the plant-based fibers are preferably selected from linen, hemp, cotton or a combination thereof, more preferably linen, hemp, sarga or a combination thereof.

9. The material according to any one of the preceding claims, wherein the textile is biobased and biodegradable, preferably compostable.

10. The material according to any one of the preceding claims wherein the BC layer and the textile layer are attached each other by means of an intermediate layer such as an adhesive layer.

11. A method for preparing the material as defined in any one of the preceding claims, said method comprising the following steps:
- providing a layer of bacterial cellulose (BC);
- providing a layer of a textile comprising fibers and/or yarns; and
- attaching both layers.

12. The method according to claim 11, wherein the layer of BC is obtained by a process comprising: (i) culturing in a culture medium a symbiotic culture of bacteria and yeast (SCOBY) comprising at least one bacterial strain of *Komagataeibacter xylinus* and the yeast *Brettanomyces bruxellensis* and (ii) recovering the BC produced from the culture medium.

13. An article comprising the material as defined in any one of the claims 1 to 10, wherein said material is disposed in the article such that it comprises, in order from the exterior to the interior, the layer of bacterial cellulose (BC) and the layer of textile.

14. The article according to claim 13 selected from footwear, furniture, upholstery, bags, purses, luggage, gloves, belts, wallets, clothing, automotive interiors, interior decoration, packaging, equestrian leather articles, books, notebooks and stationary.

15. Use of the material as defined in any one of the claims 1 to 10 as leather substitute.
